# EUROPÄISCHE PATENTSCHRIFT

(11) **EP 4 252 917 B1**
(45) Veröffentlichungstag und Bekanntmachung des Hinweises auf die Patenterteilung: **22.04.2026**
(21) Anmeldenummer: 22164740.7
(22) Anmeldetag: 28.03.2022
(51) Int. Cl.: B05B 11/02, G01B 11/02, G01B 11/06, G01F 11/02, G01S 15/08, G01S 15/88, G01S 17/08, G01S 17/88

(54) **SPENDER FÜR FLÜSSIGKEITEN**
DISPENSER FOR LIQUIDS
DISTRIBUTEUR POUR LIQUIDES

(43) Veröffentlichungstag der Anmeldung: 04.10.2023
(73) Patentinhaber: Aptar Radolfzell GmbH, 78315 Radolfzell (DE)
(72) Erfinder: Kohnle, Jörg, 78056 Villingen-Schwenningen (DE); Körner, Joachim, 88690 Uhldingen-Mühlhofen (DE)
(74) Vertreter: Witte, Weller und Partner Patentanwälte mbB Stuttgart

(56) Entgegenhaltungen:
- EP-B1- 1 526 885
- DE-T2- 69 721 781
- FR-A1- 2 692 040
- JP-A- 2021 100 584
- US-A1- 2012 267 390
- US-A1- 2014 252 025
- US-A1- 2019 116 960
- US-A1- 2021 354 153
- US-A1- 2021 369 972

## Beschreibung

### ANWENDUNGSGEBIET UND STAND DER TECHNIK

Die Erfindung betrifft einen Spender zum Austrag von Flüssigkeiten, insbesondere zum Austrag von pharmazeutischen und kosmetischen Flüssigkeiten.

Ein solcher gattungsgemäßer Spender weist einen Flüssigkeitsspeicher sowie eine Austragöffnung auf, durch die hindurch die Flüssigkeit abgegeben werden kann. Der Flüssigkeitsspeicher eines gattungsgemäßen oder erfindungsgemäßen Flüssigkeitsspenders weist üblicherweise ein Volumen von maximal 200 ml auf, insbesondere vorzugsweise von 50 ml oder weniger. Zur Förderung der Flüssigkeit aus dem Flüssigkeitsspeicher zur Austragöffnung kann eine Pumpeinrichtung vorgesehen sein. Alternativ kann auch eine Druckbeaufschlagung der Flüssigkeit unmittelbar im Flüssigkeitsspeicher genutzt werden, um Flüssigkeit auszutragen.

Bei gattungsgemäßen Spendern ist vorgesehen, dass sich ein Innenvolumen des Flüssigkeitsspeichers im Zuge der Abgabe verkleinert. Es ist daher nicht erforderlich, dass die Entnahme von Flüssigkeit durch Nachströmen von Luft in den Flüssigkeitsspeicher kompensiert wird. Stattdessen verringert sich das Innenvolumen, insbesondere durch die Verwendung eines Speicherkolbens, der den Innenraum des Flüssigkeitsspeichers begrenzt.

Bei Flüssigkeitsspendern, insbesondere bei Spendern zur Abgabe pharmazeutischer Flüssigkeiten, kann es von hoher Bedeutung sein, die im Flüssigkeitsspeicher verbleibende Flüssigkeit im Blick zu behalten, damit ausreichend früh eine baldige vollständige Entleerung des Flüssigkeitsspeicher erkannt werden und ein neuer Flüssigkeitsspender bereitgehalten werden kann.

Aus der US 2019/0116960 A1 ist ein Spendersystem bekannt, das einen Flüssigkeitsspeicher mit einem innerhalb eines Zylinders in abdichtendem Gleitkontakt verschiebbaren Kolben umfasst. Der Kolben bewegt sich im Zuge der Entleerung des Speichers zwischen einer Startposition (vollständig gefüllt) und einer Endposition (weitgehend entleert). Zur Erkennung eines bestimmten Füllstands ist außerhalb des Flüssigkeitsspeichers ein Detektor vorgesehen, der ein vom Kolben getragenes physikalisches Merkmal, beispielsweise einen Magneten oder eine farblich markierte Zone, erfasst, sobald dieses in ein lokales Erfassungsfeld eintritt.

Aus der JP 2021-100584 A ist ein Flüssigkeitsspender bekannt, der einen Flüssigkeitsspeicher mit einem beweglichen Kolben umfasst, dessen Position im Speicher Rückschlüsse auf den Füllstand erlaubt.

Die US 2021/0369972 A1 beschreibt Elektronikeinheiten mit drahtlosen Fähigkeiten zur Verwendung in einer Arzneimittelabgabevorrichtung. Mindestens eine der Elektronikeinheiten umfasst einen Prozessor, einen Sensor, der so angeordnet ist, dass er einen Füllstand eines Arzneimittelbehälters misst und ein Messergebnis an den Prozessor ausgibt, ein drahtloses Modul, mit dem ein externes Gerät gekoppelt werden kann, ein Energiemodul, das so angeordnet ist, dass es die Einheit mit Energie versorgt, und einen Speicher, der Anweisungen für den Prozessor enthält. Die Anweisungen umfassen das Aktivieren des Sensors in einem ersten Zeitintervall und das Empfangen des Messsignals; bei jeder Aktivierung des Sensors im ersten Zeitintervall wird basierend auf dem empfangenen Messsignal eine Änderung des Füllstands des Arzneimittelbehälters bestimmt, und wenn eine Änderung des Füllstands erkannt wird, wird das drahtlose Modul für eine erste Dauer aktiviert, um dem externen Gerät die Kopplung mit dem drahtlosen Modul zu ermöglichen..

### AUFGABE UND LÖSUNG

Aufgabe der Erfindung ist es, eine vorteilhafte Methode zur Erkennung der Restflüssigkeit in einem Flüssigkeitsspeicher bereitzustellen.

Zur Lösung dieser Aufgabe wird ein Spender zum Austrag von Flüssigkeiten, wie in Anspruch 1 definiert, vorgeschlagen, der insbesondere für den Austrag von pharmazeutischen oder kosmetischen Flüssigkeiten vorgesehen ist und im verkaufsfertigen Zustand mit einer entsprechenden Flüssigkeit befüllt ist. Insbesondere ist ein erfindungsgemäßer Spender mit einer hochviskosen Flüssigkeit befüllt.

Der erfindungsgemäße Spender verfügt in Übereinstimmung mit gattungsbildenden Spendern über einen Flüssigkeitsspeicher sowie über eine Austragöffnung zur Abgabe der Flüssigkeit aus dem Flüssigkeitsspeicher.

Der Flüssigkeitsspeicher weist ein Innenvolumen auf, welches im Zuge der Abgabe von Flüssigkeit verkleinert wird. Insbesondere ist vorgesehen, dass der Flüssigkeitsspeicher einen Speicherzylinder aufweist sowie einen innerhalb des Speicherzylinders verlagerbaren Speicherkolben. Bei einer solchen Gestaltung verschiebt sich der Speicherkolben im Speicherzylinder bei fortschreitendem Austrag von Flüssigkeit.

Bei dem Speicherkolben kann es sich um einen Schleppkolben oder einen Schubkolben handeln. Auch eine Kombination ist möglich.

Weist der Spender eine vom Flüssigkeitsspeicher getrennte Pumpeinrichtung auf, so ist diese über ihren Pumpeneingang mit dem Auslasskanal des Flüssigkeitsspeichers verbunden. Wird mittels der Pumpeinrichtung Flüssigkeit aus dem Flüssigkeitsspeicher entnommen, so entsteht hier im Flüssigkeitsspeicher ein Unterdruck, der den Speicherkolben in Richtung einer Speicherverkleinerung zieht. Der Speicherkolben funktioniert in diesem Falle als Schleppkolben.

Alternativ kann aber auch der Flüssigkeitsspeicher selbst eine Art Pumpkammer darstellen. Hierunter ist zu verstehen, dass der Flüssigkeitsaustrag durch einen Überdruck im Flüssigkeitsspeicher selbst bewirkt wird. Der Speicherkolben dient in diesem Falle dem Zweck, von extern und insbesondere manuell kraftbeaufschlagt zu werden und hierdurch den Druck im Flüssigkeitsspeicher zu erhöhen. Der Speicherkolben stellt daher einen Schubkolben dar.

Neben der manuellen Kraftbeaufschlagung ist es auch möglich, dass ein Speicherkolben durch eine Federeinrichtung gespannt ist und hierdurch den Flüssigkeitsspeicher unter dauerhaften Druck setzt. Sobald ein Abgabeventil an einer Ausgangsseite des Flüssigkeitsspeichers geöffnet wird oder eine Pumpeinrichtung stromabwärts des Flüssigkeitsspeichers betätigt wird, kommt es dann zum Austrag und der Speicherkolben wird von der Feder Richtung Austragöffnung geschoben.

Eine Federeinrichtung zur Kraftbeaufschlagung des Speicherkolbens kann bei der oben beschriebenen Schleppkolben-Gestaltung genutzt werden, um einen möglichen Slip-Stick-Effekt zwischen dem Speicherzylinder und dem Speicherkolben zu verringern.

Der Spender ist dafür ausgebildet, die verbleibende Flüssigkeit im Flüssigkeitsspeicher mittels eines Sensors zumindest grob zu messen, um hierbei erfasste Daten anzuzeigen und/oder anderweitig zu verarbeiten.

Die Messung erfolgt bei einem erfindungsgemäßen Spender mittels einer Abstandssensoranordnung. Diese Abstandssensoranordnung ist zur Erfassung des Abstandes zweier Gehäuseabschnitte ausgebildet und angeordnet. Die zwei Gehäuseabschnitte sind solche, deren Beabstandung sich im Zuge der Verkleinerung des Innenvolumens des Flüssigkeitsspeichers ändert.

Insbesondere kann die Abstandsmessung zwischen einer Wandung des Speicherkolbens und einer zweiten ortsfesten Wandung als anderem Gehäuseabschnitt erfolgen.

Verschiedene Messprinzipen der Abstandssensoranordnung sind möglich.

Bei Nutzung eines optischen Messprinzips kann es zweckmäßig sein, Gehäuseabschnitte des Spenders aus transparentem Material herzustellen, so dass das zur Messung verwendete Licht diese Gehäuseabschnitte durchdringen kann. Insbesondere kann vorgesehen sein, dass der Speicherzylinder einen transparenten Wandungsabschnitt aufweist, durch den hindurch die optische Messung erfolgt. Die Abstandssensoranordnung und der Speicherkolben sind dabei vorzugsweise auf gegenüberliegenden Seiten des transparenten Wandungsabschnitts vorgesehen.

Als optische Messprinzipien werden im Sinne der Erfindung jegliche Messprinzipen verstanden, die auf der Auswertung elektromagnetischer Wellen basiert, die zuvor von der Abstandssensoranordnung abgegeben wurden.

Bei optischen Messprinzipien kann insbesondere ein Lichtsensor vorhanden sein, der einfallendes Licht erfasst, das zuvor von einem Emitter der Abstandssensoranordnung abgegeben wurde und welches vorzugsweise von einer Wandung des Spenders reflektiert wurde, um zurück zum Lichtsensor geworfen zu werden. Der Lichtsensor als Empfänger kann dabei die Lichtintensität erfassen und zusammen mit der Auswerteelektronik eine Änderung der Intensität als Veränderung des Abstandes interpretieren. Alternativ kann auch die Laufzeit eines Lichtsignals oder eines anderen elektromagnetischen Signals gemessen werden, die sich mit sich ändernder Beabstandung der Gehäusebauteile ändert. Der Lichtsensor kann auch als Sensorfeld ausgestaltet sein, welches den Ort des Lichteinfalls messbar macht. Die Lichtquelle kann insbesondere als Laserlichtquelle gestaltet sein. Das Auftreffen des vorzugsweise reflektierten Laserstrahls auf dem Sensorfeld kann geometrisch den Rückschluss auf den Abstand der Gehäuseabschnitte zulassen.

Bei akustischen Messprinzipien ist vorgesehen, dass die Abstandssensoranordnung ein akustisches Signal erzeugt und dessen Ausbreitung oder insbesondere Laufzeit misst. Es kann sich insbesondere um einen Ultraschall-Distanzsensor handeln.

Für die beschriebenen Arten von Abstandssensorgestaltungen sind zum überwiegenden Teil günstige Messmodule verfügbar, auf die zurückgegriffen werden kann. Je nach Anwendungszweck der Abstandsmessung ist eine hohe Genauigkeit meist nicht erforderlich.

Eine mögliche Gestaltung sieht vor, dass der jeweilige Emitter der Sensoranordnung und der korrespondiere Empfänger jeweils fest an den beiden Gehäuseabschnitten angebracht sind, deren Beabstandung erfasst werden soll. Der Emitter und der Empfänger ändern also bei fortschreitender Entleerung des Flüssigkeitsspeichers ihren Abstand zueinander.

Bevorzugt wird allerdings eine Gestaltung, bei der der Emitter und der Empfänger zueinander ortsfest angeordnet sind, vorzugsweise indem sie Teil einer gemeinsamen Sensoreinheit sind. Diese Sensoreinheit wird an einem der beiden Gehäuseabschnitte angebracht und in Richtung des anderen Gehäuseabschnitts ausgerichtet. Die vom Emitter abgegebenen elektromagnetischen Wellen oder akustischen Wellen werden dort reflektiert und zum Empfänger zurückgeworfen.

Die Abstandssensoranordnung eines erfindungsgemäßen Spenders dient dem Zweck, die im Flüssigkeitsspeicher noch befindliche Flüssigkeitsmenge elektronisch erfassen zu können. Vorzugsweise ist die Abstandssensoranordnung Teil einer spenderseitigen Auswertungselektronik, welche insbesondere vorzugsweise neben der Abstandssensoranordnung eine Energiequelle wie insbesondere eine wiederaufladbare Batterie und einen Prozessor zur Verarbeitung der Sensordaten umfasst. Zur Weitergabe der erfassten Sensordaten verfügt die Auswertungselektronik vorzugsweise weiterhin über eine Netzwerkschnittstelle, insbesondere eine Bluetooth- und/oder eine WIFI-Schnittstelle. Auch eine 4G- oder 5G-Mobilfunkschnittstelle ist möglich. Über die Netzwerkschnittstelle kann die Auswertungselektronik mit externen Geräten wie insbesondere einem Smartphone verbunden werden.

Die Auswertungselektronik kann neben der Abstandssensoranordnung auch über weitere Sensoren verfügen, die der Auswertung der Spendernutzung dienen. So kann ein Austragsensor vorgesehen sein, der eine austragsverursachende Betätigung oder den Austrag selbst erfasst. Es kann vorgesehen sein, dass die Abstandssensoranordnung den Füllstand des Flüssigkeitsspeichers in Reaktion auf einen so erkannten Austrag erfasst. Hierdurch kann der Energieverbrauch der Abstandssensoranordnung geringgehalten werden.

Die Auswertungselektronik kann integraler Teil des Spenders sein. Als bevorzugt wird es allerdings angesehen, wenn der Spender zweigeteilt ist. Eine Austragvorrichtung umfasst dabei den flüssigkeitsführenden Teil und insbesondere den Flüssigkeitsspeicher sowie die Austragöffnung. Vorzugsweise befinden sich an der Austragvorrichtung selbst keinerlei elektronische Komponenten. Die Austragvorrichtung ist vorzugweise nicht zur wiederholten Verwendung unter Nachfüllen oder Austausch des Flüssigkeitsspeichers ausgebildet, sondern wird üblicherweise nach Entleerung entsorgt.

Die Auswertungselektronik, insbesondere jedoch mindestens die Abstandssensoranordnung mit einem Emitter und einem Empfänger, ist dagegen Teil einer separaten Auswertungseinheit. Hier sind vorzugsweise alle elektrischen und elektronischen Komponenten des Spenders zusammengefasst. Die Auswertungselektronik wird vorzugsweise nacheinander mit mehreren Austragvorrichtungen verwendet.

Die Aufgliederung dient also vor allem dem Zweck, die vergleichsweise aufwändige Auswertungseinheit wiederholt mit mehreren Austragvorrichtungen zu verwenden. Ist eine Austragvorrichtung durch Entleeren des Flüssigkeitsspeichers aufgebraucht, so wird die Auswertungseinheit von der Austragvorrichtung gelöst und die Austragvorrichtung ohne elektronische Komponenten entsorgt. Die Auswertungseinheit kann dann an einer neuen Austragvorrichtung angebracht werden.

Von Vorteil ist es, dass die Abstandssensoranordnung zur Messung der Beabstandung zweier Gehäuseabschnitte vorgesehen ist, von denen ein Gehäuseabschnitt an der Auswertungseinheit vorgesehen ist. Hier ist die Abstandssensoranordnung angebracht. Der andere Gehäuseabschnitt ist an der Austragvorrichtung vorgesehen und dient der Reflexion der elektromagnetischen oder akustischen Wellen.

Bei einer solchen Konfiguration kann die Auswertungseinheit nicht nur in der Lage sein, die Lageveränderung des Speicherkolbens zum Speicherzylinder zuverlässig zu erkennen, sondern auch zu erkennen, ob die Auswertungseinheit an einer Austragvorrichtung angekoppelt ist oder hiervon entkoppelt wurde, indem der mittels der Abstandssensoranordnung gemessene Abstand ausgewertet wird. Ist dieser größer als maximal im Betrieb zu erwarten oder ist in Reaktion auf ein emittiertes Signal kein Auftreffen eines reflektierten Signals auf dem Empfänger zu verzeichnen, so ist dies ein Indiz für den entkoppelten Zustand.

Die Auswertungseinheit ist vorzugsweise einfach an einer neue Austragvorrichtung anbringbar. Insbesondere kann die Trennung der Auswertungseinheit von einer verbrauchten Austragvorrichtung und die Kopplung an einer neue Austragvorrichtung werkzeuglos erfolgen. Die Auswertungseinheit ist vorzugsweise reib- oder formschlüssig an der Austragvorrichtung angekoppelt, insbesondere mittels einer lösbaren Rastverbindung oder einer Klemmverbindung.

Die Auswerteelektronik umfasst vorzugsweise auch eine Anzeigeeinrichtung. Alternativ dazu kann auch auf eine Anzeigeeinrichtung verzichtet werden und stattdessen das Display eines mit der Auswertungselektronik gekoppelten Smartphones zur Ausgabe von Informationen verwendet werden.

Die Anzeigeeinrichtung oder alternativ das mit dem Spender gekoppelte externe Gerät wie ein Smartphone kann auf Basis der Sensordaten der Abstandssensoranordnung den Füllstand des Flüssigkeitsspeichers anzeigen. Wenngleich es wünschenswert ist, diesen Füllstand sehr präzise zu erfassen und anzuzeigen, kann die sehr präzise Anzeige auch problematisch sein. Insbesondere bei einer Gestaltung, bei der der Speicherkolben als Schleppkolben ausgestaltet ist, kann es vorkommen, dass der Speicherkolben aufgrund von Haftreibung bei der Entnahme von Flüssigkeit nicht sofort innerhalb des Speicherzylinders nachrückt und stattdessen ein Unterdruck im Flüssigkeitsspeicher entsteht. Erst zu einem späteren Zeitpunkt und ggf. nach nochmaligem Austrag von Flüssigkeit aus dem Flüssigkeitsspeicher kommt es dann wieder zu einer Verlagerung des Speicherkolbens. Aufgrund der Ungenauigkeit in der Erfassung des Füllstandes wird es als vorteilhaft angesehen, wenn auch die Anzeige des Füllstandes auf der Anzeigeeinrichtung oder dem Display des Smartphones mit geringer Präzision erfolgt, insbesondere in maximal fünf diskreten Stufen. Damit wird verhindert, dass der Nutzer ein falsches Sicherheitsgefühl erhält, da der Flüssigkeitsspeicher vermeintlich noch voll ist, obwohl er tatsächlich bereits weiter entleert ist.

Vorteilhaft kann die Verwendung eines Systems mit nur drei Stufen bei der Anzeige des Füllstandes sein, wobei dies insbesondere in Art einer Ampel vorgesehen sein kann, die bei weitgehend befülltem Flüssigkeitsspeicher grün anzeigt, nach Entnahme einer gewissen Flüssigkeitsmenge orange anzeigt und beim Unterschreiten eines definierten Grenzwertes dann rot anzeigt, um den Nutzer zu warnen, dass er einen neuen Spender oder eine neue Austragvorrichtung griffbereit haben sollte.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 bis 4 zeigen ein erstes Ausführungsbeispiel eines nicht beanspruchten Spenders und seiner Auswertungseinheit.
Fig. 5 zeigt eine Variante des Spenders gemäß der Fig.1 bis 4 mit integrierter Auswertungselektronik.
Fig. 6 und 7 zeigen weitere Ausführungsbeispiele eines erfindungsgemäßen Spenders.
Fig. 8 zeigt ein weiteres Ausführungsbeispiel eines nicht beanspruchten Spenders.

### DETAILLIERTE BESCHREIBUNG DER AUSFÜHRUNGSBEISPIELE

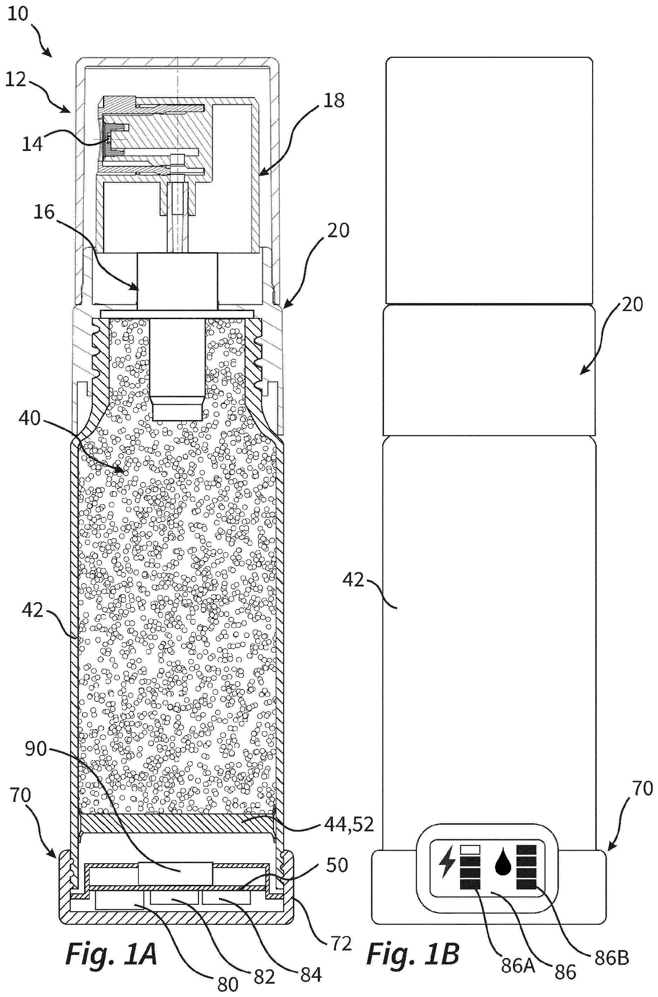

Fig. 1A bis 3 zeigen ein erstes Beispiel eines nicht beanspruchten Spenders 10. Dieser Spender 10 ist als Pumpspender ausgebildet. Er verfügt über einen Flüssigkeitsspeicher 40, auf den ein Austragkopf aufgesetzt ist. Dieser Austragkopf wiederum weist eine Basis 20 auf, an der eine Pumpeinrichtung 60 befestigt ist. Ein Auslassstutzen der Pumpeinrichtung 16 ist an einem niederdrückbaren Betätigungsdrücker 18 angebracht. Wird der Betätigungsdrücker 18 niedergedrückt, so wird hierdurch Flüssigkeit aus einer Pumpkammer der Pumpeinrichtung 16 in Richtung einer Austragöffnung 14 gedrückt und hier abgegeben. Beim Rückhub der Pumpeinrichtung 16 erfolgt ein Ansaugen von Flüssigkeit aus dem Flüssigkeitsspeicher 40.

Der Flüssigkeitsspeicher 40 wird primär durch einen Speicherzylinder 42 und einen innerhalb des Speicherzylinders verschieblichen Speicherkolben 44 begrenzt. Wenn ausgehend von dem weitgehend vollen Füllstand der Fig. 1A Flüssigkeit ausgetragen wird, so bewirkt der hierdurch im Flüssigkeitsspeicher 40 sich einstellende Unterdruck, dass der Speicherkolben 44 in Art eines Schleppkolbens nach oben nachgezogen wird.

Die beschriebenen Komponenten bilden gemeinsam eine funktionstüchtige Austragvorrichtung 12. Der Spender 10 verfügt neben dieser Austragvorrichtung 12 über eine Auswertungseinheit 70, die der Erfassung des Füllstandes des Flüssigkeitsspeichers 40 dient. Die Auswertungseinheit 70 ist in Form eines einfach ankoppelbaren Moduls ausgestaltet, welches beim vorliegenden Ausführungsbeispiel exemplarisch mittels eines Gewindes am unteren Ende des Speicherzylinders 42 anbringbar ist. Die Auswertungseinheit 70 verfügt über eine Abstandssensoranordnung 90, deren Funktionsweise im Weiteren noch erläutert wird. Darüber hinaus weist die Auswertungseinheit 70 weitere elektrische beziehungsweise elektronische Komponenten auf, nämlich eine Batterie 80, einen Prozessor 82, der vorzugsweise mit einem Speicher ausgestattet ist, sowie eine Netzwerkschnittstelle 84, insbesondere gestaltet als Bluetooth- oder WLAN-Funkmodul.

An der Außenseite der Auswertungseinheit 70 ist in der aus Fig. 1B ersichtlichen Weise eine Anzeigeeinrichtung 86 dargestellt. Diese gibt vorliegend exemplarisch zwei Informationen wieder, nämlich mittels eines ersten Balkens 86A den Füllstand der Batterie 80 und mittels eines zweiten Balkens 86B den Füllstand des Flüssigkeitsspeichers 40. Jeweils sind nur fünf Zustände vorgesehen, nämlich zwischen 0 und 4 Balken.

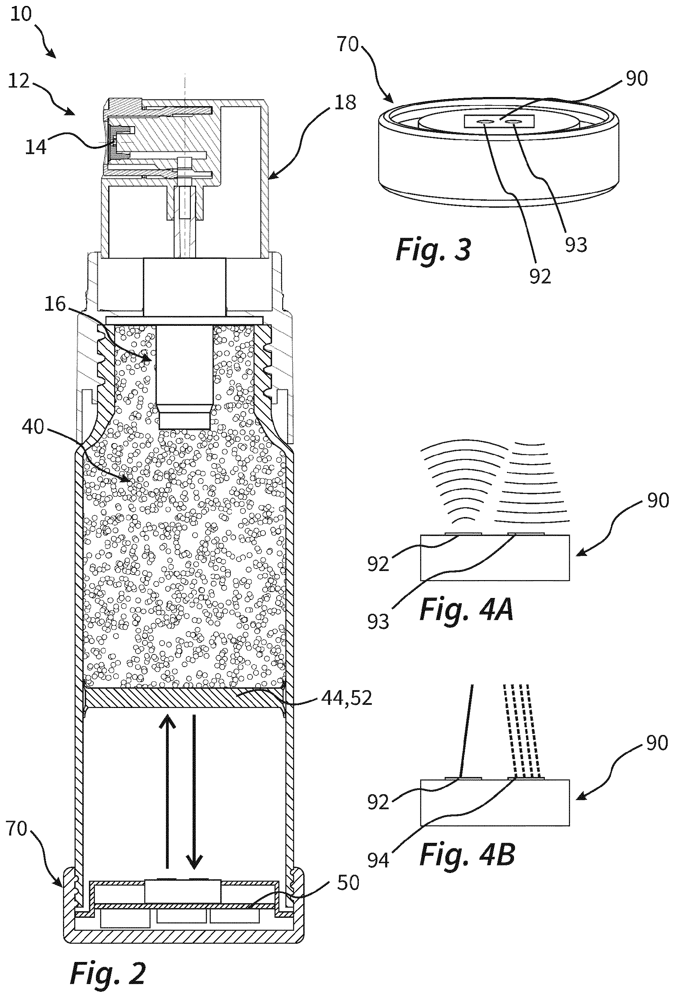

Fig. 2 zeigt den Spender 10 im Betrieb, nachdem bereits ein Teil der Flüssigkeit aus dem Flüssigkeitsspeicher 40 entnommen wurde. Die Entnahme von Flüssigkeit hat dazu geführt, dass der Speicherkolben 44 bereits etwas nach oben verschoben ist.

Zur Messung der Position des Speicherkolbens 44 und damit der im Flüssigkeitsspeicher 40 verbleibenden Flüssigkeitsmenge findet die Abstandssensoranordnung 90 Verwendung. Diese verfügt in der den Fig. 3 sowie 4A und 4B zu entnehmenden Weise über einen Emitter 92 und einen Empfänger 93, 94. Verschiedene optische und akustische Messprinzipien sind hier denkbar.

Wie in Fig. 2 dargestellt wird, gibt der Emitter 92 ein Signal ab, welches am Speicherkolben 44 reflektiert wird und somit zurück zur Abstandssensoranordnung 90 und deren Empfänger 93, 94 gelangt. Durch Messen der Laufzeit des entsprechenden Signals oder der Intensität des über den Empfänger 93 erfassten reflektierten Signals kann auf die Position des Speicherkolbens 44 rückgeschlossen werden. Eine weitere Möglichkeit ergibt sich aus der Darstellung der Fig. 4B. Hier ist vorgesehen, dass der Emitter ein gebündeltes Signal abgibt, insbesondere in Form eines Laserstrahls, das an der Unterseite des Speicherkolbens 44 reflektiert wird und in Abhängigkeit des Abstandes des Speicherkolbens 44 von der Auswertungseinheit 70 auf verschiedene Teile eines als Sensorfeld ausgestalteten Sensors 94 fällt. Der Ort des Auftreffens des Laserstrahls ist somit abhängig von der Position des Speicherkolbens 44.

Die Austragvorrichtung 12 des Spenders 10 ist zur nur einmaligen Verwendung vorgesehen. Sobald der Flüssigkeitsspeicher komplett entleert ist, wird dieser nicht neu befüllt, sondern die Austragvorrichtung 12 entsorgt. Zuvor wird jedoch die Auswertungseinheit 70 abgenommen, vorliegend exemplarisch abgeschraubt. Diese kann dann an eine frische Austragvorrichtung 12 angekoppelt werden. Zweckmäßig ist es, dass die Auswertungseinheit 70 diesen Wechsel selbstständig erkennt und diesen beispielsweise über die Netzwerkschnittstelle 84 an ein externes Gerät sendet. Dieses Erkennen kann ebenfalls mittels der Abstandssensoranordnung 90 erfolgen. Insbesondere kann als Indikator für die Trennung angesehen werden, wenn vom Emitter 92 ein Signal abgegeben wird, zu dem keine Reflexion an den Empfängern 93, 94 erfasst wird.

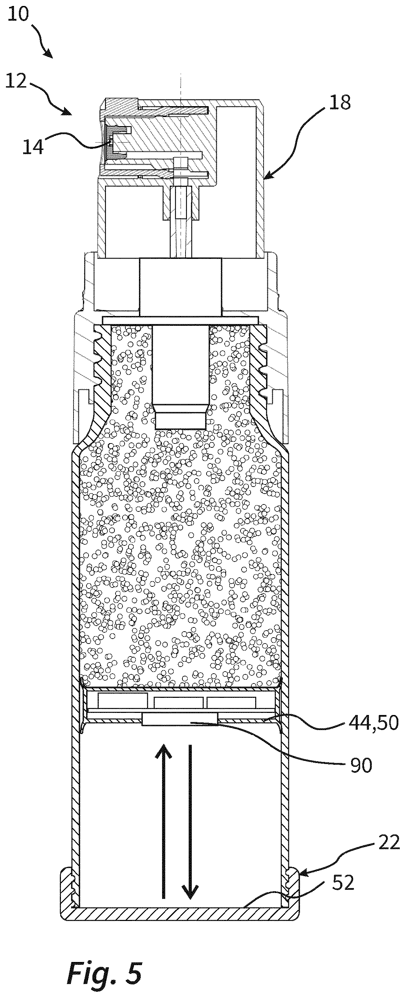

Fig. 5 zeigt eine alternative Bauweise des Flüssigkeitsspenders 10. Hier ist die Auswertungseinheit als integrierte Auswertungseinheit vorgesehen und in den Speicherkolben 44 integriert. Dagegen ist ein unterer Verschluss 22, der den Spender 10 nach unten abschließt, anders als beim vorangegangenen Ausführungsbeispiel ohne elektronische Komponenten ausgebildet. Er bildet ausschließlich einen Gehäuseabschnitt 52, der im Zuge der Messung als Reflexionsfläche verwendet wird.

Wie sich aus Fig. 5 ergibt, emittiert die Abstandssensoranordnung 90 im Falle dieser Gestaltung ein nach unten gerichtetes Signal, welches am Gehäuseabschnitt52 reflektiert wird und dann vom Empfänger der Abstandssensoranordnung 90 erfasst wird.

Ein Anzeigeeinrichtung ist bei der Gestaltung gemäß Fig. 5 nicht vorgesehen. Stattdessen wird der erfasste Flüssigkeitsstand an ein externes System wie ein Smartphone weitergesendet und dort verarbeitet und/oder angezeigt.

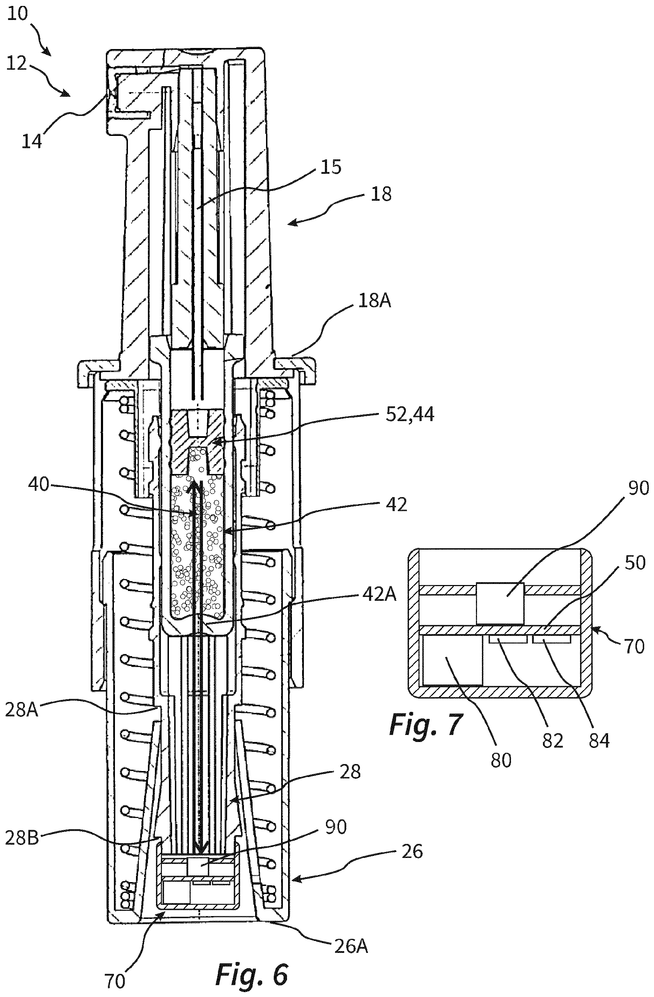

Die Gestaltung der Fig. 6 zeigt einen nochmals deutlich anderen Spender. Es handelt sich um einen sogenannten Bidose-Spender, aus dem Flüssigkeit im Rahmen zweier Teilhübe ausgetragen werden kann. Der Flüssigkeitsspeicher 40 dieses Spenders 10 ist in Form eines transparenten Speicherzylinders 42 vorgesehen, der an seinem oberen Ende durch einen Speicherkolben 44, beispielsweise aus Gummi, verschlossen ist.

Wenn ausgehend vom Zustand der Fig. 6 ein unterer Betätigungsdrücker 26 nach oben gedrückt wird, so haken Strukturen des Betätigungsdrückers 26 an einer Raststufe 28A eines Speicherzylinderträgers 28 ein, so dass zunächst der Speicherzylinder 42 und der Speicherkolben 44 gemeinsam nach oben gedrückt werden, bis eine Nadel 15 von oben durch den Speicherkolben 44 hindurchsticht. Die fortgesetzte Bewegung des Betätigungsdrückers 26 nach oben führt dann zum Austrag einer ersten Dosis der Flüssigkeit.

Nach der Ausbringung einer ersten Dosis wird der Betätigungsdrücker 26 zunächst losgelassen und durch die Rückstellfeder in seine Ausgangslage zurückgedrückt. Hierbei überfahren die Rastarme 26A des Betätigungsdrückers 26 die Haltestufen 28B, so dass bei der nächsten Betätigung hier ein Einrasten der Haltearme 26A erfolgt und demzufolge die zweite Flüssigkeitsdosis abgegeben werden kann.

Zur Auswertung der Flüssigkeitsabgabe ist am Speicherzylinderträger 28, der den Speicherzylinder 42 trägt, eine Auswertungseinheit 70 angebracht, die in Fig. 7 nochmals separat dargestellt ist. Diese Auswertungseinheit 70 ist ähnlich aufgebaut wie jene der Fig. 1 bis 4. Auch sie weist eine nach oben weisende Abstandssensoranordnung 90 auf, die einen Emitter und einen Empfänger enthält. Diese Abstandssensoranordnung ermittelt den Abstand zwischen der Auswertungseinheit 70 und dem Speicherkolben 44. Damit dies auf optischem Wege geschehen kann, ist der Speicherzylinder 42 zumindest in seinem Bodenbereich mit einem für den verwendeten Wellenlängenbereich transparenten Wandungsabschnitt 42A versehen. Wie die Pfeile in Fig. 6 verdeutlichen, gelangt das emittierte Signal von der Abstandssensoranordnung 90 somit durch diesen bodenseitigen Wandungsabschnitt 42A und durch die Flüssigkeit im Flüssigkeitsspeicher 40 bis zum Speicherkolben 44, wird dort reflektiert, um nach nochmaligem Durchqueren des Flüssigkeitsspeichers 40 und des Wandungsabschnittes 42A vom Empfänger der Abstandssensoranordnung 90 erfasst zu werden.

Wiederum kann auf Basis der gemessenen Intensität oder aber auch der gemessenen Laufzeit des Signals darauf rückgeschlossen werden, wie tief in den Speicherzylinder 42 der Speicherkolben bereits eingeschoben wurde.

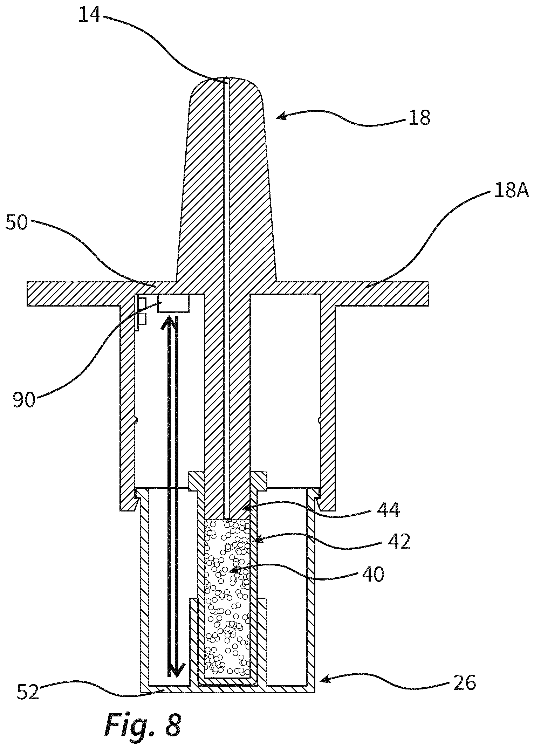

Die Fig. 8 zeigt ein weiteres Ausführungsbeispiel eines nicht beanspruchten Spenders 10. Die bauliche Gestaltung ist dabei der Fig. 6 und 7 nicht ganz unähnlich, da auch hier ein Betätigungsdrücker 26 nach oben in Richtung der Austragöffnung 14 geschoben wird, damit hierdurch ein Speicherzylinder 42 gegenüber einem Speicherkolben 44 verschoben und die enthaltene Flüssigkeit damit druckbeaufschlagt wird.

Die Besonderheit bei der Gestaltung der Fig. 8 liegt darin, dass es nicht die Position des Speicherkolbens 44 oder des Speicherzylinders 42 selbst ist, die erfasst wird. Stattdessen ist die Auswertungselektronik und ihr Abstandssensor 90 abseits des Flüssigkeitsspeichers 40 angeordnet und erfasst den Abstand zwischen der Fingerauflage 18A und dem an dieser angebrachten Abstandssensoranordnung 90 einerseits sowie einer unteren Reflexionsfläche an einem Gehäuseabschnitt 52 andererseits, der Teil des Betätigungsdrückers 26 ist.

## Patentansprüche

1. Spender (10) zum Austrag von Flüssigkeiten, insbesondere von pharmazeutischen und kosmetischen Flüssigkeiten, mit den folgenden Merkmalen:
a. der Spender weist einen Flüssigkeitsspeicher (40) auf, und
b. der Spender (10) weist eine Austragöffnung (14) zur Abgabe der Flüssigkeit aus dem Flüssigkeitsspeicher (40) auf, und
c. der Flüssigkeitsspeicher (40) weist ein Innenvolumen auf, welches im Zuge der Abgabe von Flüssigkeit verkleinert wird, und
d. der Spender (10) weist zwei Gehäuseabschnitte (50, 52) auf, deren Beabstandung sich im Zuge der Verkleinerung des Innenvolumens des Flüssigkeitsspeichers (40) ändert, und
e. der Spender (10) weist eine Abstandssensoranordnung (90) zur Erfassung des Abstandes der Gehäuseabschnitte (50, 52) auf,
f. der Flüssigkeitsspeicher (40) weist einen Speicherzylinder (42) sowie einen gegenüber dem Speicherzylinder (42) verlagerbaren Speicherkolben (44) auf, und
g. eine Wandung des Speicherkolbens (44) bildet einen der Gehäuseabschnitte (52),
**gekennzeichnet durch** das folgende weitere Merkmal:
h. der Speicherzylinder (42) weist einen transparenten bodenseitigen Wandungsabschnitt (42A) auf, und
i. die Abstandssensoranordnung (90) und der Speicherkolben (44) sind auf gegenüberliegenden Seiten des transparenten bodenseitigen Wandungsabschnitts (42A) vorgesehen, und
j. die Abstandssensoranordnung (90) weist einen Emitter und einen Empfänger auf, und
k. der Emitter und der Empfänger sind zueinander ortsfest angeordnet, und
l. der Emitter und der Empfänger sind in Richtung des durch den Speicherkolben (44) gebildeten reflektierenden Gehäuseabschnitts (52) ausgerichtet, so dass ein von der Abstandssensoranordnung (90) emittiertes Signal durch den transparenten bodenseitigen Wandungsabschnitt (42A) und durch Flüssigkeit im Flüssigkeitsspeicher (40) bis zum Speicherkolben (44) gelangt, dort reflektiert wird, um nach nochmaligem Durchqueren des Flüssigkeitsspeichers (40) und des transparenten bodenseitigen Wandungsabschnittes (42A) vom Empfänger der Abstandssensoranordnung (90) erfasst zu werden.

2. Spender (10) nach Anspruch 1 mit dem folgenden weiteren Merkmal:
a. die Abstandssensoranordnung (90) ist als optische Abstandssensoranordnung (90) ausgebildet,
vorzugsweise mit einem der folgenden zusätzlichen Merkmale:
b. der Emitter (92) ist zur Abgabe von Licht ausgebildet und der Empfänger (93) ist zur Ermittlung der Lichtintensität ausgebildet, oder
c. mittels des Emitters (92) sowie des Empfängers (93) ist ein Zeitraum zwischen Lichtabgabe durch den Emitter (92) und Lichtempfang durch den Empfänger (93) ermittelbar, oder
d. der Emitter (92) weist eine Laserlichtquelle auf sowie ein Sensorfeld (94), mittels dessen der Ort eines Lichteinfalls des Lichts der Laserlichtquelle erfasst werden kann.

3. Spender (10) nach Anspruch 1 mit dem folgenden weiteren Merkmal:
a. die Abstandssensoranordnung (90) ist als akustische Abstandssensoranordnung (90) ausgebildet,
vorzugsweise mit dem folgenden zusätzlichen Merkmal:
b. die Abstandssensoranordnung (90) weist einen Ultraschall-Distanzsensor auf.

4. Spender nach einem der vorstehenden Ansprüche mit den folgenden weiteren Merkmalen:
a. der Spender weist eine vom Flüssigkeitsspeicher getrennte Pumpeinrichtung auf, die über einen Pumpeneingang und einen Pumpenausgang verfügt, wobei der Pumpeneingang mit dem Flüssigkeitsspeicher verbunden ist und wobei der Pumpenausgang mit der Austragöffnung verbunden ist, und
b. der Speicherkolben ist als Schleppkolben ausgebildet, der durch die Entnahme von Flüssigkeit aus dem Flüssigkeitsspeicher verlagert wird.

5. Spender (10) nach einem der Ansprüche 1 bis 3 mit den folgenden weiteren Merkmalen:
a. der Flüssigkeitsspeicher (40) ist als Pumpspeicher ausgebildet, der über einen Speicherausgang verfügt, der mit der Austragöffnung (14) verbunden ist, und
b. der Speicherkolben (44) ist als Schubkolben ausgebildet, der durch manuelle Kraftbeaufschlagung relativ zum Speicherzylinder (42) verlagerbar ist, wobei durch die Relativverlagerung Flüssigkeit aus dem Flüssigkeitsspeicher (40) zur Austragöffnung (14) gedrückt wird.

6. Spender (10) nach Anspruch 1 mit den folgenden weiteren Merkmalen:
a. der Spender (10) weist eine Austragvorrichtung (12) auf, die mindestens den Flüssigkeitsspeicher (40) und die Austragöffnung (14) aufweist, und
b. der Spender (10) weist eine von der Austragvorrichtung (12) lösbare Auswertungseinheit (70) auf, die mindestens die Abstandssensoranordnung (90) umfasst,
vorzugsweise mit mindestens einem der folgenden zusätzlichen Merkmale:
c. die Austragvorrichtung (12) und die Auswertungseinheit (70) sind zur werkzeuglosen Kopplung und Entkopplung vorgesehen, und/oder
d. die Austragvorrichtung (12) und die Auswertungseinheit (70) weisen Kopplungsflächen zur formschlüssigen oder reibschlüssigen Kopplung miteinander auf.

7. Spender (10) nach einem der vorstehenden Ansprüche mit mindestens einem der folgenden weiteren Merkmale:
a. der Spender (10) weist eine Batterie (80) zum Betrieb der Abstandssensoranordnung (90) auf, und/oder
b. der Spender weist einen Prozessor (82) auf, und/oder
c. der Spender weist eine Netzwerkschnittstelle (84) zur Kommunikation mit einem externen Gerät auf, wobei die Netzwerkschnittstelle vorzugsweise eine drahtlose Netzwerkschnittstelle ist, und/oder
d. der Spender (10) weist einen Sensor zur Erfassung eines Austragvorgangs und/oder einen Bewegungssensor auf, und/oder
e. der Flüssigkeitsspeicher (40) ist mit einer pharmazeutischen oder mit einer kosmetischen Flüssigkeit gefüllt, wobei insbesondere der Flüssigkeitsspeicher (40) mit einer hochviskosen Flüssigkeit gefüllt ist.

8. Spendersystem mit den folgenden Merkmalen:
a. das Spendersystem weist einen Spender (10) nach einem der vorstehenden Ansprüche auf, und
b. das Spendersystem weist eine elektronische Anzeigeeinrichtung (86) zur Anzeige des Füllstandes des Flüssigkeitsspeichers (40) des Spenders (10) auf,
vorzugsweise mit mindestens einem der folgenden Merkmale:
c. die Anzeigeeinrichtung (86) ist am Spender (10) vorgesehen, insbesondere an der lösbaren Auswertungseinheit (70) des Spenders (10), oder
d. die Anzeigeeinrichtung wird durch eine externe Einheit gebildet, insbesondere durch ein persönliches elektronisches Gerät wie einem Smartphone.

9. Spendersystem nach Anspruch 8 mit den folgenden zusätzlichen Merkmalen:
a. die Anzeigeeinrichtung ist dafür ausgebildet, den Füllstand des Flüssigkeitsspeichers in maximal fünf diskreten Stufen anzuzeigen.

## Claims

1. Dispenser (10) for dispensing liquids, in particular pharmaceutical and cosmetic liquids, having the following features:
a. the dispenser comprises a liquid reservoir (40), and
b. the dispenser (10) has an outlet opening (14) for dispensing the liquid from the liquid reservoir (40), and
c. the liquid reservoir (40) has an internal volume which is reduced in size in the course of the dispensing of liquid, and
d. the dispenser (10) comprises two housing sections (50, 52), the spacing of which changes in the course of the reduction in size of the internal volume in the liquid reservoir (40), and
e. the dispenser (10) comprises a distance sensor arrangement (90) for detecting the spacing between the housing sections (50, 52),
f. the liquid reservoir (40) comprises a reservoir cylinder (42) and a reservoir piston (44) which is displaceable relative to the reservoir cylinder (42), and
g. a wall of the reservoir piston (44) forms one of the housing sections (52),
**characterized by** the following further feature:
h. the reservoir cylinder (42) comprises a transparent bottom wall section (42A), and
i. the distance sensor arrangement (90) and the reservoir piston (44) are provided on opposite sides of the transparent bottom wall section (42A), and
j. the distance sensor arrangement (90) comprises an emitter and a receiver, and
k. the emitter and the receiver are arranged stationary relative to each other, and
I. the emitter and the receiver are aligned in the direction of the reflective housing section (52) formed by the reservoir piston (44) such that a signal emitted by the distance sensor arrangement (90) passes through the transparent bottom wall section (42A) and through liquid in the liquid reservoir (40) to the reservoir piston (44), where it is reflected, in order to be detected by the receiver of the distance sensor arrangement (90) after passing through the liquid reservoir (40) and the transparent bottom wall section (42A) again.

2. Dispenser (10) according to Claim 1, having the following further feature:
a. the distance sensor arrangement (90) is in the form of an optical distance sensor arrangement (90),
preferably having one of the following additional features:
b. the emitter (92) is designed to emit light, and the receiver (93) is designed to determine the light intensity, or
c. a time period between light emission by the emitter (92) and light reception by the receiver (93) can be determined by means of the emitter (92) and the receiver (93), or
d. the emitter (92) comprises a laser light source and a sensor field (94), by means of which the location of light incidence of the light from the laser light source can be detected.

3. Dispenser (10) according to Claim 1, having the following further feature:
a. the distance sensor arrangement (90) is in the form of an acoustic distance sensor arrangement (90),
preferably having the following additional feature:
b. the distance sensor arrangement (90) comprises an ultrasonic distance sensor.

4. Dispenser according to any of the preceding claims, having the following further features:
a. the dispenser comprises a pump device which is separate from the liquid reservoir and which comprises a pump inlet and a pump outlet, wherein the pump inlet is connected to the liquid reservoir and wherein the pump outlet is connected to the outlet opening, and
b. the reservoir piston is designed as a follower piston which is displaced by the withdrawal of liquid from the liquid reservoir.

5. Dispenser (10) according to any of Claims 1 to 3, having the following further features:
a. the liquid reservoir (40) is in the form of a pump reservoir which has a reservoir outlet connected to the outlet opening (14), and
b. the reservoir piston (44) is designed as a drive piston which is displaceable relative to the reservoir cylinder (42) by manual application of force, wherein liquid is pressed out of the liquid reservoir (40) to the outlet opening (14) by the relative displacement.

6. Dispenser (10) according to Claim 1, having the following further features:
a. the dispenser (10) comprises a discharge apparatus (12) comprising at least the liquid reservoir (40) and the outlet opening (14), and
b. the dispenser (10) comprises an evaluation unit (70) which is detachable from the discharge apparatus (12) and which comprises at least the distance sensor arrangement (90),
preferably having at least one of the following additional features:
c. the discharge apparatus (12) and the evaluation unit (70) are provided for tool-free coupling and decoupling, and/or
d. the discharge apparatus (12) and the evaluation unit (70) comprise coupling surfaces for interlocking or frictional coupling to each other.

7. Dispenser (10) according to any of the preceding claims, having at least one of the following further features:
a. the dispenser (10) comprises a battery (80) for operating the distance sensor arrangement (90), and/or
b. the dispenser comprises a processor (82), and/or
c. the dispenser comprises a network interface (84) for communication with external equipment, wherein the network interface preferably is a wireless network interface, and/or
d. the dispenser (10) comprises a sensor for detecting a discharge process and/or a movement sensor, and/or
e. the liquid reservoir (40) is filled with a pharmaceutical liquid or with a cosmetic liquid, wherein in particular the liquid reservoir (40) is filled with a highly viscous liquid.

8. Dispenser system having the following features:
a. the dispenser system comprises a dispenser (10) according to any of the preceding claims, and
b. the dispenser system comprises an electronic display device (86) for displaying the fill level of the liquid reservoir (40) of the dispenser (10),
preferably having at least one of the following features:
c. the display device (86) is provided on the dispenser (10), in particular on the detachable evaluation unit (70) of the dispenser (10), or
d. the display device is formed by an external unit, in particular by personal electronic equipment such as a smartphone.

9. Dispenser system according to Claim 8, having the following additional features:
a. the display device is designed to display the fill level of the liquid reservoir using a maximum of five discrete steps.

## Revendications

1. Distributeur (10) destiné à distribuer des liquides, en particulier des liquides pharmaceutiques et cosmétiques, ayant les caractéristiques suivantes :
a. le distributeur possède un réservoir de liquide (40), et
b. le distributeur (10) possède une ouverture de décharge (14) servant à décharger le liquide du réservoir de liquide (40), et
c. le réservoir de liquide (40) présente un volume interne qui diminue au cours de la délivrance du liquide, et
d. le distributeur (10) possède deux portions de boîtier (50, 52) dont l'espacement varie au cours de la diminution du volume intérieur du réservoir de liquide (40), et
e. le distributeur (10) possède un arrangement détecteur de distance (90) destiné à détecter la distance entre les portions de boîtier (50, 52),
f. le réservoir de liquide (40) possède un cylindre de réservoir (42) ainsi qu'un piston de réservoir (44) qui peut se déplacer par rapport au cylindre de réservoir (42), et
g. une paroi du piston de réservoir (44) forme l'une des portions de boîtier (52),
**caractérisé par** la caractéristique supplémentaire suivante :
h. le cylindre de réservoir (42) possède une portion de paroi côté fond transparente (42A), et
i. l'arrangement détecteur de distance (90) et le piston de réservoir (44) sont prévus sur les côtés opposés de la portion de paroi côté fond transparente (42A), et
j. l'arrangement détecteur de distance (90) possède un émetteur et un récepteur, et
k. l'émetteur et le récepteur sont disposés en position fixe l'un par rapport à l'autre, et
I. l'émetteur et le récepteur sont orientés dans la direction de la portion de boîtier (52) réfléchissante formée par le piston de réservoir (44), de sorte qu'un signal émis par l'arrangement détecteur de distance (90) traverse la portion de paroi côté fond transparente (42A) et traverse le liquide dans le réservoir de liquide (40) jusqu'au piston de réservoir (44), y est réfléchi, afin d'être détecté par le récepteur de l'arrangement détecteur de distance (90) après avoir traversé une nouvelle fois le réservoir de liquide (40) et la portion de paroi côté fond transparente (42A).

2. Distributeur (10) selon la revendication 1, comprenant la caractéristique supplémentaire suivante :
a. l'arrangement détecteur de distance (90) est réalisé sous la forme d'un arrangement détecteur de distance (90) optique,
de préférence avec l'une des caractéristiques supplémentaires suivantes :
b. l'émetteur (92) est configuré pour émettre de la lumière et le récepteur (93) est configuré pour déterminer l'intensité lumineuse, ou
c. un intervalle de temps entre l'émission de lumière par l'émetteur (92) et la réception de lumière par le récepteur (93) peut être déterminé au moyen de l'émetteur (92) aisni que du récepteur (93), ou
d. l'émetteur (92) possède une source de lumière laser ainsi qu'un champ de détection (94) au moyen duquel l'emplacement d'une incidence lumineuse de la lumière de la source de lumière laser peut être détecté.

3. Distributeur (10) selon la revendication 1, comprenant la caractéristique supplémentaire suivante :
a. l'arrangement détecteur de distance (90) est réalisé sous la forme d'un arrangement détecteur de distance (90) acoustique,
de préférence avec la caractéristique supplémentaire suivante :
b. l'arrangement détecteur de distance (90) possède un capteur de distance ultrasonique.

4. Distributeur selon l'une des revendications précédentes, comprenant les caractéristiques supplémentaires suivantes :
a. le distributeur possède un équipement de pompe séparé du réservoir de liquide, qui dispose d'une entrée de pompe et d'une sortie de pompe, l'entrée de pompe étant reliée au réservoir de liquide et la sortie de pompe étant reliée à l'ouverture de décharge, et
b. le piston de réservoir est réalisé sous la forme d'un piston traînant qui est déplacé par le prélèvement de liquide du réservoir de liquide.

5. Distributeur (10) selon l'une des revendications 1 à 3, comprenant les caractéristiques supplémentaires suivantes :
a. le réservoir de liquide (40) est réalisé sous la forme d'un réservoir d'accumulation par pompage qui dispose d'une sortie de réservoir, laquelle est reliée à l'ouverture de décharge (14), et
b. le piston de réservoir (44) est réalisé sous la forme d'un piston poussant qui peut être déplacé par rapport au cylindre de réservoir (42) par application manuelle d'une force, le liquide étant refoulé hors du réservoir de liquide (40) vers l'ouverture de décharge (14) par le déplacement relatif.

6. Distributeur (10) selon la revendication 1, comprenant les caractéristiques supplémentaires suivantes :
a. le distributeur (10) possède un dispositif de décharge (12) qui possède au moins le réservoir de liquide (40) et l'ouverture de décharge (14), et
b. le distributeur (10) possède une unité d'évaluation (70) qui peut être détachée du dispositif de décharge (12), laquelle comprend au moins l'arrangement détecteur de distance (90),
de préférence avec au moins l'une des caractéristiques supplémentaires suivantes :
c. le dispositif de décharge (12) et l'unité d'évaluation (70) sont prévus pour un accouplement et un désaccouplement sans outil, et/ou
d. le dispositif de décharge (12) et l'unité d'évaluation (70) présentent des surfaces d'accouplement pour l'accouplement par complémentarité de formes ou par friction.

7. Distributeur (10) selon l'une des revendications précédentes, comprenant au moins l'une des caractéristiques supplémentaires suivantes :
a. le distributeur (10) possède une batterie (80) destinée à faire fonctionner l'arrangement détecteur de distance (90), et/ou
b. le distributeur possède un processeur (82), et/ou
c. le distributeur possède une interface réseau (84) servant à la communication avec un appareil externe, l'interface réseau étant de préférence une interface réseau sans fil, et/ou
d. le distributeur (10) possède un capteur destiné à détecter un processus de décharge et/ou un capteur de mouvement, et/ou
e. le réservoir de liquide (40) est rempli d'un liquide pharmaceutique ou cosmétique, le réservoir de liquide (40) étant en particulier rempli d'un liquide très visqueux.

8. Système de distribution comprenant les caractéristiques suivantes :
a. le système de distribution possède un distributeur (10) selon l'une des revendications précédentes, et
b. le système de distribution possède un équipement d'affichage électronique (86) destiné à afficher le niveau de remplissage du réservoir de liquide (40) du distributeur (10),
de préférence avec au moins l'une des caractéristiques supplémentaires suivantes :
c. l'équipement d'affichage (86) est prévu sur le distributeur (10), en particulier sur l'unité d'évaluation (70) amovible du distributeur (10), ou
d. l'équipement d'affichage est formé par une unité externe, en particulier par un appareil électronique personnel tel qu'un smartphone.

9. Système de distribution selon la revendication 8, comprenant les caractéristiques supplémentaires suivantes :
a. l'équipement d'affichage est configuré pour afficher le niveau de remplissage du réservoir de liquide en cinq étapes distinctes au maximum.
